# EUROPEAN PATENT SPECIFICATION

(11) **EP 4 262 488 B1**
(45) Date of publication and mention of the grant of the patent: **09.12.2026**
(21) Application number: 21907594.2
(22) Date of filing: 14.12.2021
(51) Int. Cl.: A47J 31/06, A47J 31/08

(54) **ESPRESSO EASY RELEASE FILTER**
LEICHT ZU LÖSENDER ESPRESSOFILTER
FILTRE À LIBÉRATION FACILE D'ESPRESSO

(30) Priority: 15.12.2020 US 202063125744 P
(43) Date of publication of application: 25.10.2023
(73) Proprietor: Sunbeam Products, Inc., Boca Raton, FL 33431 (US)
(72) Inventor: STARK, Lauren, Delray Beach, FL 33444 (US)
(74) Representative: Cabinet Beau de Loménie
(86) International application number: PCT/US2021/063204
(87) International publication number: WO 2022/132695

(56) References cited:
- EP-A1- 0 088 335
- EP-A1- 2 918 197
- CN-U- 202 714 726
- GB-A- 2 505 041
- KR-A- 20070 110 020
- KR-A- 20150 017 541
- KR-A- 20150 017 541
- US-A1- 2016 309 943

## Description

### CROSS-REFERENCE TO RELATED APPLICATIONS

This Application claims priority to U.S. Provisional Patent Application Serial No. 63/125,744, filed on December 15, 2020, entitled "ESPRESSO EASY RELEASE FILTER".

### FIELD OF THE INVENTION

The present invention is generally directed to an improved mechanism for releasing and securing a filter basket in a portafilter used to brew espresso.

### BACKGROUND

As is known in the art, brewing espresso involves forcing hot water, under high pressure, through finely ground compacted coffee beans. Such coffee grounds are contained in a basket of a portafilter. Water is then forced at high pressures through the portafilter and coffee grounds contained therein. Performing the compacting process using coffee grounds under high pressure leaves tightly compacted, wet coffee grounds in a basket of the portafilter. For a subsequent use, a consumer must remove those same wet grounds. Most often, a consumer does so by banging or striking the portafilter upside down over a trash can.

Unfortunately, sometimes the filter basket in the portafilter is too loose and falls into the trash can along with the coffee grounds. This can be not only frustrating, but also messy.

One attempt to solve this problem includes using multiple springs for holding the filter basket in place until it needs to be removed for cleaning. However, this method is prone to compressing the filter basket too tightly to the portafilter, making it difficult to remove the filter basket for a thorough cleaning after use. Other attempts to solve this problem include the use of external securing mechanisms on the portafilter, or additional components used within the portafilter to secure the filter basket in place. However, such external and additional items require additional storage space, make the portafilter harder to operate, and/or introduce additional parts in need of cleaning.

Accordingly, there exists a need for a portafilter for espresso makers that can securely hold the filter basket in place, without holding the filter basket so tightly that removing it is overly difficult for an operator.
GB 2 505 041 A discloses a detachable filtering element of a coffee machine.
EP 2 918 197 A1 discloses a filter holder assembly, filter holder coffee machine and discharge insert.
KR 2015 0017541 A discloses a beverage maker for all cartridges.

### SUMMARY OF THE INVENTION

The present invention is directed to a system for releasably, yet simply, coupling a filter basket to a portafilter for use with an espresso coffee maker. The system generally includes a portafilter with a handle for easy use and manipulation. The portafilter may further comprise a circumferential recessed groove located in an interior of the portafilter. The recessed groove may be defined along the entire interior circumference, or alternatively, may stop at a point prior to making a completed loop. A spring may be adapted for placement in the groove, and the spring may (in at least one embodiment) similarly feature a terminal point such that the spring is not a complete loop.

The portafilter also may include an opening at a rear portion thereof. The opening may be used to receive a tab or tactile touch point that is coupled to the spring. The tab may be manipulated by an operator to manipulate the spring to couple, or uncouple, the filter basket to or from the portafilter. When a filter basket is initially placed in the portafilter, the tab spring may be located substantially within the recessed groove with the tab in a first position. When an operator wishes to securely couple the basket to the portafilter, he or she may slide the tab to a second position, causing the spring to compress inwardly toward the filter basket and the interior of the portafilter. The tension in the spring causes an interference fit between the spring and the filter basket thereby securing the filter basket within the portafilter. The tension keeps the filter basket in place during use and when the portafilter is removed to empty the used grounds.

To empty the used grounds, a user may bang the portafilter against a trash can without fear of the basket falling into the trash. Alternatively, he or she may slide the tab back to the first position and release the tension in the spring such that the filter basket may then easily be removed from the portafilter and cleaned for a subsequent use.

Other and further objects of the invention, together with the features of novelty appurtenant thereto, will appear in the course of the following description.

### BRIEF DESCRIPTION OF THE SEVERAL VIEWS OF THE DRAWING

In the accompanying drawings, which form a part of the specification and are to be read in conjunction therewith in which like reference numerals are used to indicate like or similar parts in the various views:
Fig. 1 is a top plan view of an espresso easy release filter in an open position in accordance with one embodiment of the present invention;
Fig. 2 is a rear elevation view of an adjustable toggle point of an espresso easy release filter in an open position in accordance with one embodiment of the present invention;
Fig. 3 is a top plan view of an espresso easy release filter in a closed position in accordance with one embodiment of the present invention; and
Fig. 4 is a rear elevation view of an adjustable toggle point of an espresso easy release filter in a closed position in accordance with one embodiment of the present invention.

### DETAILED DESCRIPTION OF THE INVENTION

The invention will now be described with reference to the drawing figures, in which like reference numerals refer to like parts throughout. For purposes of clarity in illustrating the characteristics of the present invention, proportional relationships of the elements have not necessarily been maintained in the drawing figures. It will be appreciated that any dimensions included in the drawing figures are simply provided as examples and dimensions other than those provided therein are also within the scope of the invention.

The following detailed description of the invention references specific embodiments in which the invention can be practiced. The embodiments are intended to describe aspects of the invention in sufficient detail to enable those skilled in the art to practice the invention. Other embodiments can be utilized and changes can be made without departing from the scope of the present invention. The present invention is defined by the appended claims and the description is, therefore, not to be taken in a limiting sense and shall not limit the scope of equivalents to which such claims are entitled.

The present invention is directed to a system for emptying a filter basket of an espresso portafilter, in a manner that prevents or reduces the likelihood of the filter basket located within the portafilter falling out. The present invention may be compatible with any known espresso machines or makers that are currently known or espresso machines that have yet to be designed, manufactured, or may otherwise become available in the future. Accordingly, the present invention may be compatible with other beverages types, including without limitation tea, coffee, or other beverages utilizing pressure filtration systems.

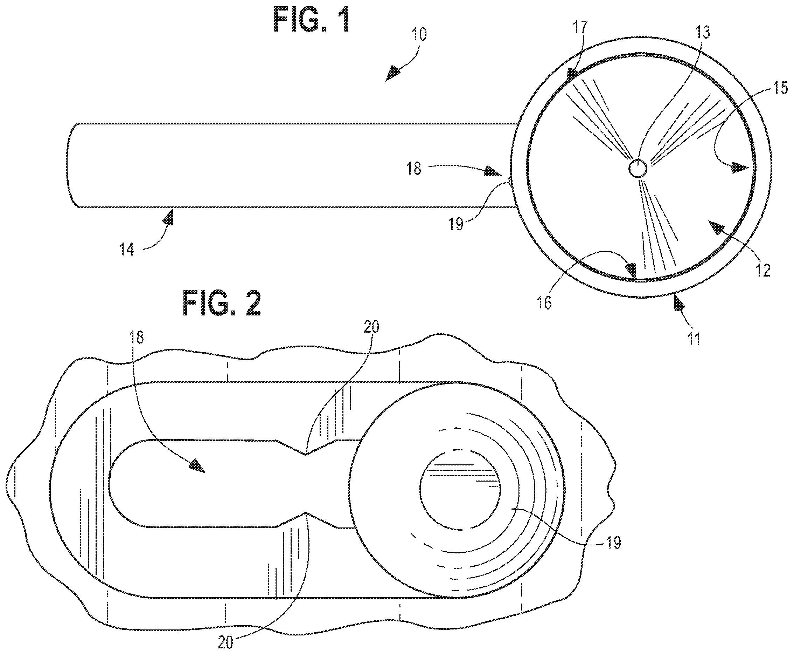

Turning first to Fig. 1, the invention hereof is an improved easy release filter 10 that can be used during the espresso brewing process. As understood in the art, the easy release filter 10 may be designed in accordance with any known or foreseeable specifications for portafilter for use with espresso makers. As illustrated, the easy release filter 10 includes a portafilter 11 having a cavity 12 in which a filter basket (not illustrated) may be received. The filter basket may be filled with coffee grounds when ready for use with an espresso maker.

As illustrated, the portafilter 11 is generally cylindrical or circular; however, other geometric shapes are within the scope of the present invention. The portafilter 11 may have a generally solid bottom with a defined opening or drip hole 13 (such as is known in the art) through which brewed beverage may drip after passing over the grounds in the filter basket. To help a user operate use the portafilter 11, a handle or stem 14 may extend outwardly from the portafilter 11.

The portafilter 11 may further comprise a recess or groove 15 defined or otherwise located in its cavity 12. As best illustrated by Fig. 1, the groove 15 may be formed as a generally circumferential recess that recesses radially outwardly into an inner wall defining the cavity 12, away from the hole 13. In one embodiment, the groove 15 may extend the entire inner circumference of portafilter 11, but in alternative embodiments, may terminate at an earlier point.

A spring 16 is preferably received and retained within the groove 15. The spring 16 may utilize any known method or apparatus for the storing of elastic potential energy. The spring 16 may be of a size and shape that generally conforms to the size and shape of the portafilter 11, and more particularly the groove 15. In one embodiment, it may comprise a generally circular shape.

In the illustrated embodiment, the spring 16 includes a terminal point 17 such that the spring 16 does not form a closed loop. Put another way, the spring 16 may have a gap between its starting point and the terminal point 17 such that the spring 16 is an incomplete circle (or other shape, in alternative embodiments). The terminal point 17 may be fitted or otherwise in connection with a terminal end of the groove 15 or may alternatively be in contact with a tab or other object positioned in the groove 15. It will be appreciated that in alternate embodiments of the present invention, the spring 16 could comprise a closed loop, with no terminal point 17.

The portafilter 11 may further comprise an opening 18 extending through the surface of the portafilter 11. In one embodiment, the opening 18 may be positioned such that it is generally aligned with the handle 14, where the handle 14 begins extending rearwardly from the portafilter 11. However, in other embodiments, the opening 18 may be positioned at any point along the circumference of portafilter 18.

The opening 18, which is illustrated in greater detail in Fig. 2, may be of any geometric shape, including circular, ovular, triangular, rectangular, or other polygonal shape. Further, the opening 18 may be positioned above the handle 14. However, in other embodiments, the opening 18 may be positioned below, or even with, the handle 14.

The spring 16 preferably includes a tab member 19 located at a starting point of the spring 16. When the spring 16 is positioned in the groove 15, the tab 19 may extend at least partially through the portafilter 11 via the opening 18. In this position, the spring 16 may be "at rest" and "locked in place" within the groove 15. As described below, when an operator toggles the tab member 19 from side to side, the spring 16 may flex inwardly and outwardly to retain and release, respectively, a filter basket contained within the portafilter 11.

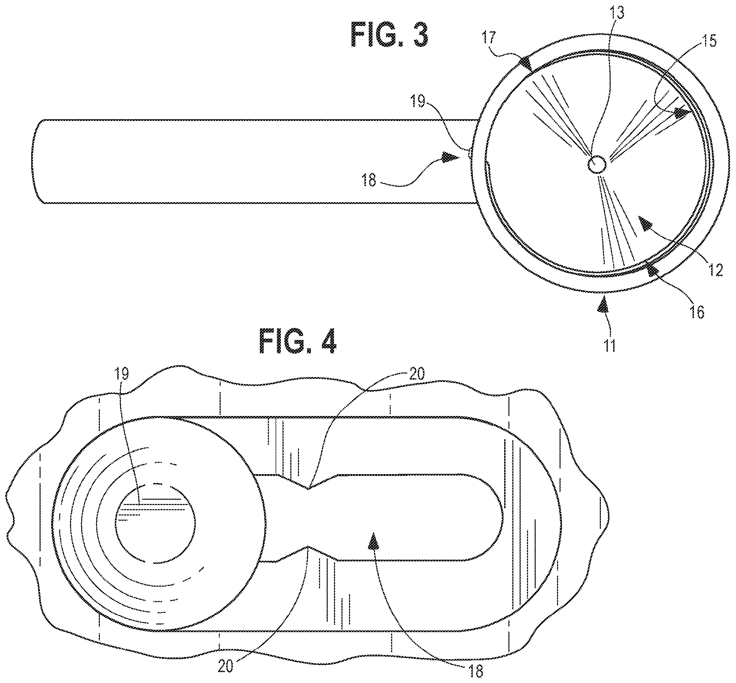

The opening 18 may comprise at least one notch member 20 that operates to keep the tab member 19 on one side or the other of the opening 18 after a user has placed the tab member 19 on one side. The notch member 20 may vary in design and may be of any geometric shape. In the illustrated embodiment, it is generally triangular in shape. In the illustrated embodiment, the opening 18 includes two corresponding notch members 20, with one positioned on the top portion of opening 18 and one positioned on the bottom portion of opening 18. The notch members 20 may retain the tab member 19 on one side or the other of the opening 18 and thus keep the spring 16 positioned in the recess of groove 15 (as illustrated in Figs. 1 and 2) in the "open" position, or pull the spring 16 inwardly from the groove 15 (as illustrated in Figs. 3 and 4) to the "closed" position. The tab member 19 is preferably retained in the opening 18 by creating an interference fit with the notch member 20.

As set forth above, the easy release filter 10 may transition from an open mode to a closed mode by manipulating the tab member 19. Figs. 3 and 4 illustrate the easy release filter 10 while in the "closed" position. As illustrated in Fig. 4, when force is applied to the tab member 19, the tab member 19 may overcome the holding force created by the notch members 20, and the tab member 19 may move to the opposite side of the opening 18. Because the tab member 19 can slide to either side of the opening 18, an operator may also have a visual representation as to whether the easy release filter 10 is in the open and closed position. As touch point 19 is manipulated into the secondary position in the opening 18, the corresponding addition of tension to spring 16 can cause spring 16 to bend or otherwise extend inwardly into the interior of portafilter 11. To return the easy release filter 10 to the open position, the operator may apply force to return the tab member 19 back to its original position in opening 18.

A filter basket used for brewing espresso or coffee may be placed in portafilter 11 when easy release filter 10 is in the open position. Once a filter basket has been placed in the portafilter 11, the easy release filter 10 may be placed in the closed position using the manner described above. When in the closed position, at least a portion of the spring 16 comes into contact with and applies a force to the exterior of the filter basket. The increased tension created by the spring 16 as it extends into the cavity 12 of the portafilter 11 can create an interference fit between the spring 16 and the filter basket, thereby locking the filter basket in place.

The interference fit is advantageous during the brewing process. For some operators, it may also be advantageous after the brewing process is complete, and it is time to remove grounds from the filter basket. When an operator taps or bangs the easy release filter 10 over a trash receptacle, the interference fit created by spring 16 reduces or eliminates the chance of a filter basket falling out of the portafilter 11 and into the trash receptacle. After the used coffee grounds have been removed from the filter basket or if an operator would like to remove the grounds from the filter basket with the filter basket removed from the portafilter 11, the easy release filter 10 can be ready for use again.

When the operator is ready to remove the filter basket for cleaning (or to remove coffee/espresso grounds therefrom), the operator may return the tab member 19 to the open position, causing the interference fit between the spring 16 and filter basket to cease. The operator may then remove the filter basket from the cavity 12 of the portafilter 11 for cleaning.

From the foregoing, it will be seen that this invention is one well adapted to attain all the ends and objects hereinabove set forth together with other advantages which are inherent to the structure and method. It will be understood that certain features and sub combinations are of utility and may be employed without reference to other features and sub combinations. This is contemplated by and is within the scope of the claims. Since many possible embodiments of the invention may be made without departing from the scope thereof, it is also to be understood that all matters herein set forth or shown in the accompanying drawings are to be interpreted as illustrative and not limiting.

The constructions described above and illustrated in the drawings are presented by way of example only and are not intended to limit the concepts and principles of the present invention. Thus, there has been shown and described several embodiments of a novel invention. As is evident from the foregoing description, certain aspects of the present invention are not limited by the particular details of the examples illustrated herein.

## Claims

1. A portafilter (11) for brewing a beverage, the portafilter comprising:
a cavity (12) in which a filter basket may be releasably secured;
a circumferential recessed groove (15) defined in an interior of the portafilter; and
a spring (16) retained in the circumferential recessed groove;
wherein when the spring (16) is in a first position, the filter basket is secured in the portafilter; and
wherein when the spring (16) is in a second position, the filter basket is not secured in the portafilter;
the portafilter being **characterized in that**:
the spring includes a tab (19) that is manipulated to control tension in the spring.

2. The portafilter of claim 1, wherein the tab (19) extends through an opening (18) provided in the portafilter.

3. The portafilter of claim 2, wherein at least one notch member (20) is provided in the opening, and wherein the at least one notch member retains the tab (19) in a first position or a second position corresponding to the first position and the second position of the spring (16), respectively.

4. The portafilter of claim 3, wherein the opening (18) includes two notch members (20).

5. The portafilter of any of claims 1 to 4, wherein the cavity (12) includes a drip hole (13).

6. The portafilter of any of claims 1 to 5, wherein the spring includes a terminal point (17).

7. The portafilter of any of claims 1 to 6, wherein the portafilter includes a handle (14) extending outwardly from the cavity.

8. The portafilter of any of claims 1 to 7, wherein in the first position, the spring (16) extends at least partially radially into the cavity (12) from the circumferential recessed groove (15).

9. The portafilter of any of claims 1 to 8, wherein in the second position, the spring (16) is positioned entirely within the circumferential recessed groove (15) without extending into the cavity (12).

## Patentansprüche

1. Siebträger (11) zum Brühen eines Getränks, der Siebträger umfassend:
eine Ausnehmung (12), in der ein Siebkorb lösbar befestigbar ist;
eine umlaufende, ausgesparte Nut (15), die im Inneren des Siebträgers definiert ist; und
eine Feder (16), die in der umlaufenden, ausgesparten Nut gehalten wird;
wobei, wenn die Feder (16) in einer ersten Position ist, der Siebkorb in dem Siebträger befestigt ist; und
wobei, wenn die Feder (16) in einer zweiten Position ist, der Siebkorb nicht in dem Siebträger befestigt ist;
wobei der Siebträger **dadurch gekennzeichnet ist, dass**:
die Feder eine Lasche (19) beinhaltet, die betätigt wird, um eine Spannung in der Feder zu steuern.

2. Siebträger nach Anspruch 1, wobei sich die Lasche (19) durch eine Öffnung (18) erstreckt, die in dem Siebträger bereitgestellt ist.

3. Siebträger nach Anspruch 2, wobei mindestens ein Rastelement (20) in der Öffnung bereitgestellt ist, und wobei das mindestens eine Rastelement die Lasche (19) in einer ersten Position oder einer zweiten Position hält, die jeweils der ersten Position bzw. der zweiten Position der Feder (16) entsprechen.

4. Siebträger nach Anspruch 3, wobei die Öffnung (18) zwei Rastelemente (20) beinhaltet.

5. Siebträger nach einem der Ansprüche 1 bis 4, wobei die Ausnehmung (12) ein Ablaufloch (13) beinhaltet.

6. Siebträger nach einem der Ansprüche 1 bis 5, wobei die Feder einen Abschlusspunkt (17) beinhaltet.

7. Siebträger nach einem der Ansprüche 1 bis 6, wobei der Siebträger einen Griff (14) beinhaltet, der sich von der Ausnehmung nach außen erstreckt.

8. Siebträger nach einem der Ansprüche 1 bis 7, wobei sich die Feder (16) in der ersten Position zumindest teilweise radial aus der umlaufenden, ausgesparten Nut (15) in die Ausnehmung (12) erstreckt.

9. Siebträger nach einem der Ansprüche 1 bis 8, wobei die Feder (16) in der zweiten Position vollständig innerhalb der umlaufenden, ausgesparten Nut (15) positioniert ist, ohne sich in die Ausnehmung (12) zu erstrecken.

## Revendications

1. Porte-filtre (11) pour l'infusion d'une boisson, le porte-filtre comprenant :
une cavité (12) dans laquelle un panier-filtre peut être fixé de manière amovible ;
une gorge périphérique en retrait (15) définie à l'intérieur du porte-filtre ; et
un ressort (16) maintenu dans la gorge périphérique en retrait ;
dans lequel, lorsque le ressort (16) est dans une première position, le panier-filtre est fixé dans le porte-filtre ; et
dans lequel, lorsque le ressort (16) est dans une deuxième position, le panier-filtre n'est pas fixé dans le porte-filtre ;
le porte-filtre étant **caractérisé en ce que** :
le ressort comprend une languette (19) qui est manipulée pour contrôler la tension du ressort.

2. Porte-filtre selon la revendication 1, dans lequel la languette (19) s'étend à travers une ouverture (18) prévue dans le porte-filtre.

3. Porte-filtre selon la revendication 2, dans lequel au moins un élément d'encoche (20) est prévu dans l'ouverture, et dans lequel le au moins un élément d'encoche retient la languette (19) dans une première position ou une deuxième position correspondant respectivement à la première position et à la deuxième position du ressort (16).

4. Porte-filtre selon la revendication 3, dans lequel l'ouverture (18) comprend deux éléments d'encoche (20).

5. Porte-filtre selon l'une quelconque des revendications 1 à 4, dans lequel la cavité (12) comprend un orifice d'égouttement (13).

6. Porte-filtre selon l'une quelconque des revendications 1 à 5, dans lequel le ressort comprend un point terminal (17).

7. Porte-filtre selon l'une quelconque des revendications 1 à 6, dans lequel le porte-filtre comprend une poignée (14) s'étendant vers l'extérieur à partir de la cavité.

8. Porte-filtre selon l'une quelconque des revendications 1 à 7, dans lequel, dans la première position, le ressort (16) s'étend au moins partiellement radialement dans la cavité (12) à partir de la gorge périphérique en retrait (15).

9. Porte-filtre selon l'une quelconque des revendications 1 à 8, dans lequel, dans la deuxième position, le ressort (16) est positionné entièrement à l'intérieur de la gorge périphérique en retrait (15) sans s'étendre dans la cavité (12).
